(19)

Europäisches
Patentamt
European
Patent Office
Office européen
des brevets

(11) **EP 2 239 687 A2**

(12) **EUROPEAN PATENT APPLICATION**

(43) Date of publication:
**13.10.2010 Bulletin 2010/41**

(51) Int Cl.:
***G06K 9/46*** *(2006.01)*

(21) Application number: **10157537.1**

(22) Date of filing: **24.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(30) Priority: **08.04.2009 JP 2009093623**

(71) Applicant: **Sony Corporation
Tokyo 180-0075 (JP)**

(72) Inventor: **Okubo, Atsushi
TOKYO 108-0075 (JP)**

(74) Representative: **Beder, Jens
Mitscherlich & Partner
Patent-und Rechtsanwälte
Sonnenstraße 33
80331 München (DE)**

(54) **Gabor filter, image recognition apparatus and method, program, and recording medium**

(57)     There is provided a Gabor filter, in which a value
of a parameter σ of determining shapes of a plurality of
Gabor functions having different orientations and frequencies is configured as a variable value expressed by
a function of a frequency parameter ν of specifying the
frequencies.

# FIG. 9

EP 2 239 687 A2

**Description**

BACKGROUND OF THE INVENTION

1. Field of the Present invention

The present invention relates to a Gabor filter, an image recognition apparatus and method, a program, and a recording medium, and more particularly, to a Gabor filter, an image recognition apparatus and method, a program, and a recording medium, capable of more accurately calculating a localized feature quantity with less calculation amount with respect to any feature point of any image.

2. Description of the Related Art

As a technology for determining whether or not two face images correspond to the same person, there has been a technology for extracting localized feature vectors (Gabor jets) of various feature points of the face by using a Gabor filter, learning correlation vectors constructed with entire-dimension correlation values of the Gabor filter by using an SVM (support vector machine) to generate a recognizer, and performing a recognition process by the recognizer.
The Gabor filter has been widely used as a feature quantity for various image recognition technologies, of which a representative example is face recognition. The face recognition technology using the Gabor filter is disclosed in, for example, the article "Face Recognition by Elastic Bunch Graph Matching, von der Malsburg". In the article "Face Recognition by Elastic Bunch Graph Matching, von der Malsburg", the localized feature quantity of the face feature point is obtained by the calculation of the convolution integral.
In addition, since the aforementioned calculation equation satisfies the DC-Free characteristic, a feature quantity having robustness with respect to the illumination change may be extracted. In order to satisfy the DC-Free characteristic, integration with respect to an infinite integration range is necessarily performed. However, in actual cases, since the infinite integration on an image may not be performed, the integration range is set to be sufficiently larger than a width of a Gauss window function.
In addition, the inventor firstly proposed an image processing apparatus of generating a recognizer used for a recognition process in a recognition mode by performing a statistic learning process using Adaboost (for example, refer to Japanese Unexamined Patent Application Publication No. 2008-165731). As disclosed in Japanese Unexamined Patent Application Publication No. 2008-165731, a combination of some sets of localized feature quantities may be determined by selecting square areas having arbitrary positions and sizes from feature dimensions where some of feature quantities obtained by, for example, 40 Gabor filters are arrayed in scales and orientations As a result, the influence of unnecessary parameters may be eliminated.
In the article "Face Recognition by Elastic Bunch Graph Matching" written by von der Malsburg, a value of a parameter σ of determining a shape of a Gabor filter is commonly used for Gabor kernels having various frequencies and orientation parameters and is set such that σ =2π. Therefore, the width of the Gauss window function becomes σ/k, so that the width is inversely proportional to the frequency k. Accordingly, in order to calculate a low-frequency feature quantity, a wide integration range is not necessarily taken.
However, in general, when a convolution calculation using a wide integration range in a process of extracting a feature quantity of an object image is to be performed, the following problems occur.
Firstly, a sufficiently large input corresponding to the integration range may be necessarily prepared.
Secondly, for example, in the case where a kernel is calculated and stored in a memory in advance, a large memory area may be necessarily provided.
Thirdly, if the feature quantity in the vicinity of a boundary between an object and a background is to be extracted, a large feature quantity of the background image area is included.
Fourthly, the calculation amount is increased proportional to the integration area.
Due to these problems, in many actual calculation cases, the convolution calculation is performed in the state that the DC-Free characteristic is allowed not to be satisfied and the integration range is limited. In this case, robustness with respect to an illumination change deteriorates.

SUMMARY OF THE INVENTION

It is desirable to provide a Gabor filter, an image recognition apparatus and method, a program, and a recording medium, capable of more accurately calculating a localized feature quantity with less calculation amount with respect to any feature point of any image.
According to a first embodiment of the present invention, there is provided a Gabor filter, in which a value of a parameter σ of determining shapes of a plurality of Gabor functions having different orientations and frequencies is configured as a variable value expressed by a function of a frequency parameter $v$ of specifying the frequencies.
A constant $v_0$ determined by an integration range of a calculation of the Gabor filter is designated, and the parameter $\sigma$ may be configured as a variable value calculated by the following Equation 5.

[Equation 5]

$$\sigma(\nu) = 2\pi \cdot 2^{-\left(\frac{\nu-\nu_0}{2}\right)}$$

In addition, a gradation value of an input image may be denoted by I; an orientation parameter of specifying the orientation may be denoted by $\mu$; a result $J_j$ of a j-th Gabor filter among the plurality of the Gabor filters may be expressed by the following Equation 4; and the result may be calculated based on the following Equations 3, 6, and 2.

[Equation 4]

$$J_j(\vec{x}_i) = \int I(\vec{x}') \psi_j(\vec{x}_i - \vec{x}') d^2 \vec{x}'$$

[Equation 3]

$$j = \mu + 8\nu$$

[Equation 6]

$$\psi_j(\vec{x}) = 2^{\nu_0} \exp\left[ -\frac{x^2}{2 \cdot \left[2^{-\frac{\nu_0}{2}}\right]^2} \right] \left[ \exp(i\vec{k}_j\vec{x}) - \exp(-\pi^2 \cdot 2^{-(\nu-\nu_0)}) \right]$$

[Equation 2]

$$\vec{k}_j = \begin{pmatrix} k_{jx} \\ k_{jy} \end{pmatrix} = \begin{pmatrix} k_\nu \cos\phi_\mu \\ k_\nu \sin\phi_\mu \end{pmatrix}, \; k_\nu = 2^{-\frac{\nu+2}{2}\pi}, \; \phi_\mu = \mu\frac{\pi}{8}$$

In the first embodiment of the invention, a value of a parameter $\sigma$ of determining shapes of a plurality of Gabor functions having different orientations and frequencies is configured as a variable value expressed by a function of a frequency parameter $v$ of specifying the frequencies.
According to a second embodiment of the present invention, there is provided an image recognition apparatus including: a feature point detection means for detecting a feature point of an image of input image data; a feature quantity detection means for detecting a localized feature quantity of the feature point by using a Gabor filter, in which a value of a parameter $\sigma$ of determining shapes of a plurality of Gabor functions having different orientations and frequencies is configured as a variable value expressed by a function of a frequency parameter $v$ of specifying the frequencies; a calculation means for calculating a correlation coefficient between the detected feature quantity and a feature quantity

3

of a registered image that is registered in advance; and an output means for outputting a recognition result of determining based on the correlation coefficient whether or not the registered image is included in the image of the input image data.

A constant $v_0$ determined by an integration range of a calculation of the Gabor filter is designated, and the parameter σ may be configured as a variable value calculated by the following Equation 5.

[Equation 5]

$$\sigma(\nu) = 2\pi \cdot 2^{-(\frac{\nu - \nu_0}{2})}$$

In addition, a gradation value of an input image may be denoted by I; an orientation parameter of specifying the orientation may be denoted by $\mu$; a result $J_j$ of a j-th Gabor filter among the plurality of the Gabor filters may be expressed by the following Equation 4; and the result may be calculated based on the following Equations 4, 3, 6, and 2.

[Equation 4]

$$J_j(\vec{x}_i) = \int I(\vec{x}') \psi_j(\vec{x}_i - \vec{x}') d^2 \vec{x}'$$

[Equation 3]

$$j = \mu + 8\nu$$

[Equation 6]

$$\psi_j(\vec{x}) = 2^{\nu_0} \exp\left(-\frac{x^2}{2 \cdot \left(2^{-\frac{\nu_0}{2}}\right)^2}\right) \left[\exp(i\vec{k}_j \vec{x}) - \exp(-\pi^2 \cdot 2^{-(\nu - \nu_0)})\right]$$

[Equation 2]

$$\vec{k}_j = \begin{pmatrix} k_{jx} \\ k_{jy} \end{pmatrix} = \begin{pmatrix} k_\nu \cos\phi_\mu \\ k_\nu \sin\phi_\mu \end{pmatrix}, \quad k_\nu = 2^{-\frac{\nu+2}{2}\pi}, \quad \phi_\mu = \mu\frac{\pi}{8}$$

According to a third embodiment of the present invention, there is provided an image recognition method including steps of: detecting a feature point of an image of input image data; detecting a localized feature quantity of the feature point by using a Gabor filter, in which a value of a parameter σ of determining shapes of a plurality of Gabor functions having different orientations and frequencies is configured as a variable value expressed by a function of a frequency parameter $\nu$ of specifying the frequencies; calculating a correlation coefficient between the detected feature quantity and a feature quantity of a registered image that is registered in advance; and outputting a recognition result of determining based on the correlation coefficient whether or not the registered image is included in the image of the input image data.

According to a fourth embodiment of the present invention, there is provided a program allowing a computer to function as an image recognition apparatus including: a feature point detection means for detecting a feature point of an image of input image data; a feature quantity detection means for detecting a localized feature quantity of the feature point by using a Gabor filter, in which a value of a parameter σ of determining shapes of a plurality of Gabor functions having different orientations and frequencies is configured as a variable value expressed by a function of a frequency parameter ν of specifying the frequencies; a calculation means for calculating a correlation coefficient between the detected feature quantity and a feature quantity of a registered image that is registered in advance; and an output means for outputting a recognition result of determining based on the correlation coefficient whether or not the registered image is included in the image of the input image data.

In the second to fourth embodiments of the invention, a feature point of an image of input image data is detected; a localized feature quantity of the feature point is detected by using a Gabor filter, in which a value of a parameter σ of determining shapes of a plurality of Gabor functions having different orientations and frequencies is configured as a variable value expressed by a function of a frequency parameter ν of specifying the frequencies; a correlation coefficient between the detected feature quantity and a feature quantity of a registered image that is registered in advance is calculated; and a recognition result of determining based on the correlation coefficient whether or not the registered image is included in the image of the input image data is output.

According to the invention, it is possible to more accurately calculate a localized feature quantity with less calculation amount with respect to any feature point of any image.

BRIEF DESCRIPTION OF THE DRAWINGS

Fig. 1 is a block diagram illustrating an example of a configuration of an image processing apparatus according to an embodiment of the invention.
Fig. 2 is a diagram illustrating an example where 40 Gabor filters are arrayed based on a scale and an orientation.
Fig. 3 is a diagram illustrating an example of a carrier which is constructed with cosine (or sine) components.
Fig. 4 is a diagram illustrating an example of a Gauss window function.
Fig. 5 is a diagram illustrating an example of a waveform of a characteristic of a Gabor filter corresponding to Figs. 3 and 4.
Fig. 6 is a diagram illustrating another example of the carrier which is constructed with cosine (or sine) components.
Fig. 7 is a diagram illustrating another example of the Gauss window function.
Fig. 8 is a diagram illustrating an example of a Gabor filter in the related art.
Fig. 9 is a diagram illustrating an example of a Gabor filter according to the invention.
Fig. 10 is a flowchart illustrating an example of a recognition process of the image processing apparatus of Fig. 1.
Fig. 11 is a diagram illustrating a state where a square area having an arbitrary size at an arbitrary position is selected among Gabor filters.
Fig. 12 is a block diagram illustrating another example of a configuration of the image processing apparatus according to an embodiment of the invention.
Fig. 13 is a flowchart illustrating an example of a learning process of the image processing apparatus of Fig. 12.
Fig. 14 is a flowchart illustrating an example of a recognition process of the image processing apparatus of Fig. 12.
Fig. 15 is a block diagram illustrating an example of a configuration of a personal computer.

DESCRIPTION OF THE PREFERRED EMBODIMENTS

Hereinafter, exemplary embodiments of the invention will be described with reference to the drawings.

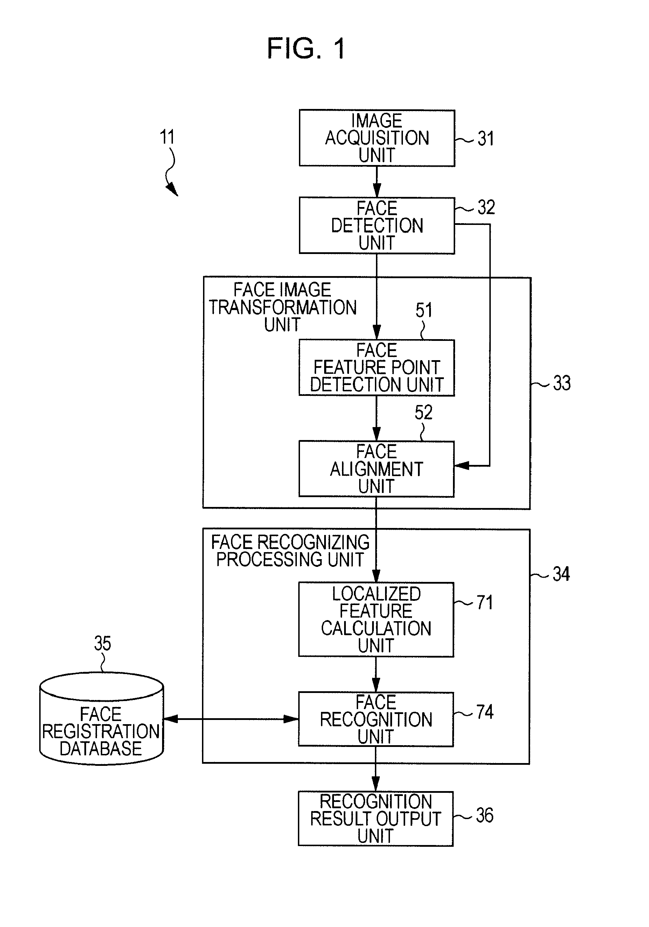

Fig. 1 is a block diagram illustrating an example of a configuration of an image processing apparatus 11 according to an embodiment of the invention.
The image processing apparatus 11 performs an image recognition process by using a photographed image of a person and performs a process of determining whether or not the person is a registered person.
The image processing apparatus 11 recognizes the image by applying a process using the later described Gabor filter and performs a process of determining whether or not the to-be-recognized image contains a face of the registered person.
The image processing apparatus 11 is configured to include an image acquisition unit 31, a face detection unit 32, a face image transformation unit 33, a face recognition processing unit 34, a face registration database 35, and a recognition result output unit 36.
In addition, although the face registration database 35 is included in the image processing apparatus 11 in the description hereinafter, the face registration database 35 may be configured to be connected to the image processing apparatus 11 via a network (not shown) or the like. If the face registration database 35 is connected thereto via the network or the like, one face registration database 35 may be commonly used for a plurality of the image processing apparatuses 11.

The image acquisition unit 31 may be configured to include, for example, a camera to have a function of photographing a person. Alternatively, the image acquisition unit 31 may acquire an image of a photographed person from an externally-provided camera or other apparatuses. In addition, the image acquisition unit 31 acquires the photographed image including a face portion of the person, that is, the object of recognition. The image acquired by the image acquisition unit 31 is an image including at least a face portion of the person. The image acquired by the image acquisition unit 31 is supplied to the face detection unit 32.

The face detection unit 32 extract a portion of a face of a person (position and size thereof on the face) by analyzing an image supplied from the image acquisition unit 31 and detects an image of the extracted portion of the face of the person (hereinafter, referred to as a face image). The image supplied from the image acquisition unit 31 is an image including the face of the to-be-recognized person. However, the image may be not only the face image but also, for example, an image of a whole body of the person. In this case, the face detection unit 32 determines an area of the face of the person from the image and extracts the image corresponding to the portion of the face of the person. The detected face image is supplied to the face feature point detection unit 51 and the face alignment unit 52 of the face image transformation unit 33.

The face image transformation unit 33 is configured to include the face feature point detection unit 51 and the face alignment unit 52.

The face feature point detection unit 51 detects the alignment feature point used for the later described morphing process of the face alignment unit 52 the face image supplied from the face detection unit 32. The alignment feature point may be feature portions such as the eyes, the nose, or the mouth on the face of a person, that is, face feature portions. In addition to the face feature portions, more detailed portions thereof may be detected as the feature points.

The face feature point detection unit 51 may detect the feature position by using, for example, a method called AAM (active appearance models).

The face alignment unit 52 detects which direction the extracted face is directed to by analyzing the face image supplied from the face detection unit 32 and the alignment feature point detected by the face feature point detection unit 51. Next, the face alignment unit 52 performs the morphing process such as affine transformation so that the face feature position is aligned with a reference position. Therefore, for example, in the case of an image of the face straightly viewed in front of the face, a morphing process is performed so that the left and right eyes are located to be separated by a predetermined distance from horizontal positions, so that the nose is located below the center between the left and right eyes, and so that the mouth is located below the nose. Accordingly, the face image supplied from the face detection unit 32, which is not straightly viewed in front of the face, is transformed into substantially the same face image that is straightly viewed in front of the face. As a result, the face image acquired by the image acquisition unit 31 that is not straightly viewed in front of the face may also be recognized.

The face recognition processing unit 34 is configured to include a localized feature calculation unit 71 and a face recognition unit 74.

The face image, of which the extracted feature point is corrected to the reference position, is supplied to the localized feature calculation unit 71 of the face recognition processing unit 34. The localized feature calculation unit 71 calculates localized feature quantities with respect to a plurality of the feature points of the supplied face image. The feature points for obtaining the localized feature quantities may be the same as the alignment feature point detected by the face feature point detection unit 51. Alternatively, the feature points may be a plurality of feature points that are entirely different from the alignment feature point detected by the face feature point detection unit 51. The localized feature calculation unit 71 is constructed with a Gabor filter.

Now, a process (Gabor filtering) of the Gabor filter is described. First, a process of a Gabor filter in the related art is described.

It is well-known that human visual cells include cells having selectivity with respect to specific orientations. The visual cells include cells that are sensitive to a vertical line and cells that are sensitive to a horizontal line. The Gabor filter is a spatial filter constructed with a plurality of filters having orientation sensitivity.

The Gabor filter is spatially represented by a Gabor function. The Gabor function is expressed by the following Equation (1).

$$\psi_j(\vec{x}) = \frac{k_j^2}{\sigma^2} \exp\left(-\frac{k_j^2 x^2}{2\sigma^2}\right)\left[\exp(i\vec{k_j}\vec{x}) - \exp\left(-\frac{\sigma^2}{2}\right)\right]$$

$$\cdots (1)$$

In Equation (1), x attached with the vector symbol is a 2-D vector constructed with elements (x, y) indicating a coordinate position of the feature point of the input image. In addition, the coordinate position of the feature point is set to, for example, the coordinate position of the alignment feature point detected by the face feature point detection unit 51.

In addition, $\sigma$ in Equation (1) is a parameter of determining a form of the Gabor function, that is, a form of the Gabor filter.

In addition, $k_j$ in Equation (1) denotes the localized feature quantity determined by the frequency parameter and the orientation parameter, and in actual cases, is a 2-D vector having elements ($k_{jx}$, $k_{jy}$), which is expressed by Equation (2).

$$\vec{k_j} = \begin{pmatrix} k_{jx} \\ k_{jy} \end{pmatrix} = \begin{pmatrix} k_\nu \cos\phi_\mu \\ k_\nu \sin\phi_\mu \end{pmatrix}, \quad k_\nu = 2^{-\frac{\nu+2}{2}\pi}, \quad \phi_\mu = \mu\frac{\pi}{8}$$

$$\cdots (2)$$

Accordingly, the Gabor function expressed by Equation (1) is configured by multiplying the carrier constructed with cosine (or sine) components with an envelope in a 2-D Gauss analysis shape (Gauss window function).

In addition, $k\nu$ is a value corresponding to the frequency of the Gabor filter, which is changed according to the frequency parameter $\nu$. In addition, $\phi\mu$ is a value corresponding to the orientation of the Gabor filter, which is changed according to the orientation parameter $\mu$.

For example, 40 (=5×8) Gabor filters may be obtained by setting five frequency parameters $\nu$ and eight orientation parameters $\mu$. The parameter j in Equation (1) and Equation (2) specifies any one of the aforementioned 40 Gabor filters and is expressed by Equation (3).

$$j = \mu + 8\nu$$

$$\cdots (3)$$

In the calculation of feature quantities in the process of the Gabor filter, each of the feature quantities is calculated by using a plurality of Gabor filters having different orientations and frequencies. Herein, the process of calculating the feature quantities of the feature points is performed by using a total of 40 Gabor filters having eight orientations and five frequencies.

In addition, since the calculation result of Equation (1) is necessarily used to obtain the feature quantity vector (Gabor Jet) by using the later described Equation (4), the calculation may be performed in advance, and the calculation result stored in a memory or the like in advance. In other words, the calculation result of Equation (1) with respect to pixels in a predetermined range around one feature point as the center thereof may be stored in a memory or the like.

For example, in Equation (1), the calculation result that is obtained by replacing the x attached with the vector symbol with each of the coordinate positions (x-32, y-32) to (x+32, y+32) may be stored in a memory or the like in advance. Therefore, the calculation of the integral expressed by the later described Equation (4) may be performed at a high speed.

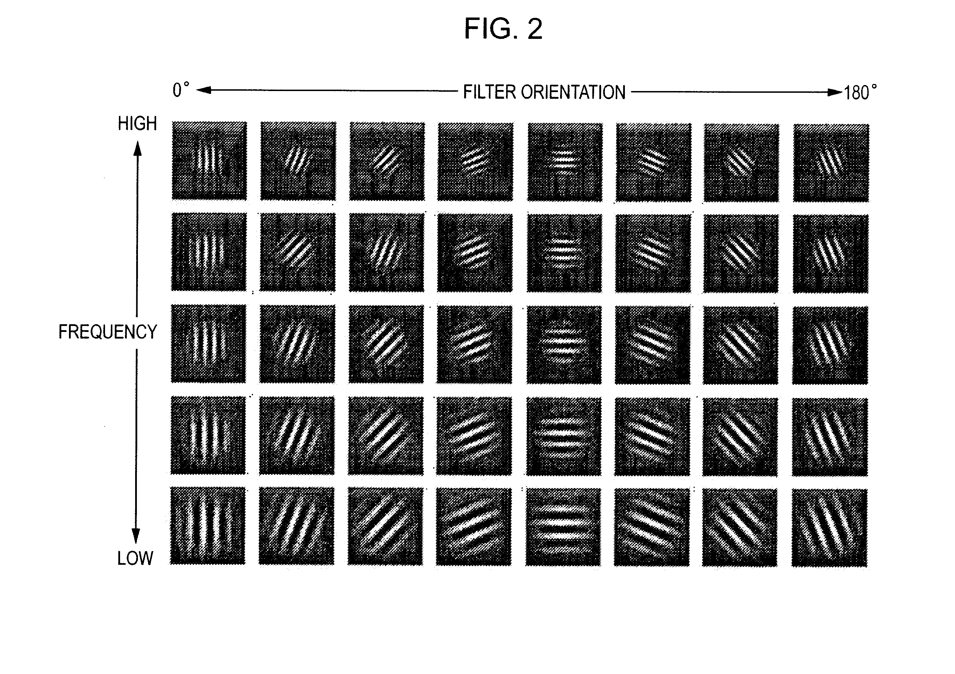

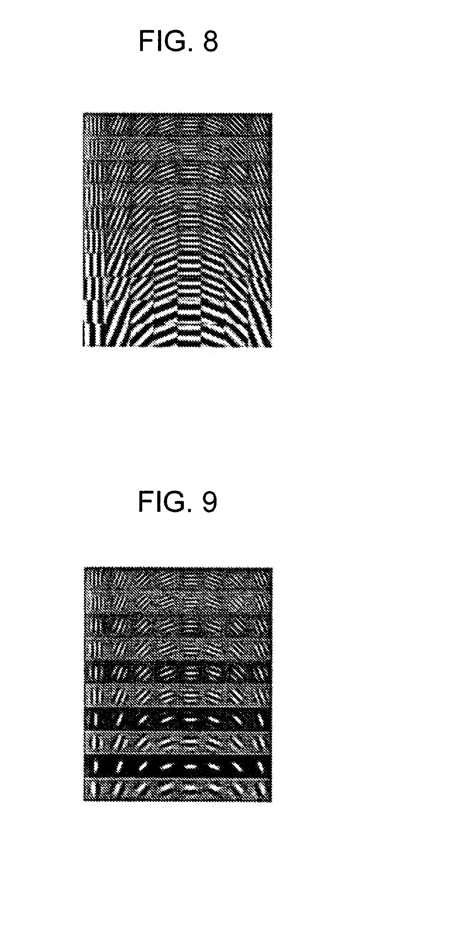

Fig. 2 illustrates an example where 40 Gabor filters are arrayed based on a scale and an orientation. In addition, the Gabor filter is a Gabor filter in the related art. The Gabor filter according to the invention is described later with reference to Fig. 9. In Fig. 2, each of the 40 squares visualizes the Gabor filter. Herein, in the figure, the Gabor filters are visualized by distinguishing filter coefficients of the Gabor filters loaded on pixel positions of an image corresponding to areas of the squares. In the figure, bright portions correspond to high filter coefficient values, and dark portions correspond to low filter coefficient values.

In Fig. 2, the vertical axis represents an amount of change in the frequency direction. In the axis, an upper portion corresponds to a high frequency, and a lower portion corresponds to a low frequency. In addition, in the figure, the horizontal axis represents an amount of change in the filter orientation (angle). In the axis, the leftmost portion corresponds to 0 degrees; as it goes to the right side, the angle is increased; the central portion corresponds to 90 degrees; and the rightmost side corresponds to an angle of about 180 degrees. In other words, in the filter array in Fig. 2, the filters in the leftmost column and the filters in the rightmost column are consecutive filters as the angle is changed.

The position in the vertical axis of Fig. 2 is specified by the aforementioned frequency parameter $\nu$, and the position in the horizontal axis of Fig. 2 is specified by the aforementioned orientation parameter $\mu$.

For example, a filter having a high frequency and an angle of 0 degrees or 180 degrees is suitable for the process of calculating the feature quantity in the vicinity of the eye in a human face. In addition, a filter having a low frequency and an angle of 90 degrees is suitable for the process of calculating the feature quantity in the vicinity of the nose in a human face.

If a result (Gabor feature) of the j-th Gabor filter is denoted by $J_j$ and a gradation value of the input image is denoted by I, the response of the Gabor filter is expressed by Equation (4). In addition, in Equation (4), the feature point is denoted by $x_i$ attached with the vector symbol, where i is an integer of 1 to M.

$$J_j(\vec{x}_i) = \int I(\vec{x}')\psi_j(\vec{x}_i - \vec{x}')d^2\vec{x}'$$

$$\cdots (4)$$

In other words, in Equation (4), convolution integral is performed by taking a predetermined range around the feature point (for example, a range of $\pm$ 32 pixels in the vertical and horizontal directions from the pixel of the feature point) as the integration range. If 40 Gabor filters are used, 40 feature quantities may be obtained with respect to one feature point. In other words, a feature quantity vector (Gabor Jet) having 40 parameters (elements) may be obtained with respect to one feature point.

In addition, as described above, if each of the calculation results that are obtained by replacing the x attached with the vector symbol in Equation (1), for example, with the coordinate positions (x-32, y-32) to (x+32, y+32) is stored in a memory in advance, the integral calculation of Equation (4) may be performed at a high speed.

Moreover, the Gabor function described above with reference to Equation (1) is configured to satisfy the DC-Free characteristic. A feature quantity of an image having the DC-Free characteristic is a feature quantity that is invulnerable to a DC component of the image. In the case where images A and B are obtained by photographing the same object with the white balance or aperture of a camera changed, a characteristic of recognizing that the images A and B are the images of the same object may be improved by using the feature quantity. In other words, the Gabor filter having the DC-Free characteristic may extract the features that are invulnerable to a color tone of the image, a light intensity at the photographing time, or the like.

Since the term "$-\exp(-\sigma^2/2)$" is included in Equation (1), Equation (1) satisfies the DC-Free characteristic. As described above, the parameter $\sigma$ in Equation (1) is designated to a parameter for determining the shape of the Gabor filter, and at the time of calculating Gabor Jet in the process of the Gabor filter in the related art, a common value thereof, which is not associated with the value of the parameter j, has been used. In other words, in the aforementioned Equation (4), although the 40 feature quantities corresponding to the 40 Gabor filters are calculated by changing the parameter j, the same value of the parameter $\sigma$ has been used for the 40 calculations.

For example, in the method disclosed in the article "Face Recognition by Elastic Bunch Graph Matching," written by von der Malsburg et al., the parameter $\sigma$ is set to $2\pi$.

In addition, as described above, Equation (1) is configured as a product of a Gauss window function and a carrier constructed with cosine (or sine) components. The term "$(k_j^2/2) \exp(-(k_j^2 x^2/2\sigma^2))$" in Equation (1) is the Gauss window function, and a width of the Gauss window function may be obtained as $\sigma/k$. In other words, the width of the Gauss window function in Equation (1) is inversely proportional to a frequency of the Gabor filter.

If the width of the Gauss window function is large, a wide integration range is necessarily taken for the calculation of the feature quantity vector expressed by Equation (4).

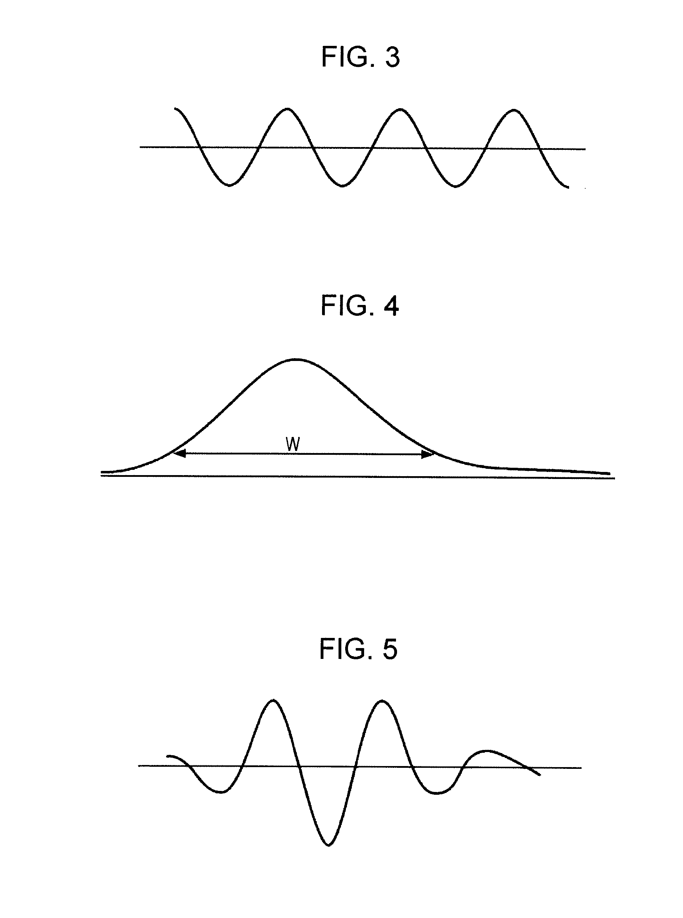

For example, a case where the carrier constructed with cosine (or sine) components shown in Fig. 3 is multiplied with the Gauss window function shown in Fig. 4 is considered. In addition, in Figs. 3 and 4, the horizontal axes correspond to, for example, pixel positions, and the vertical axes correspond to, for example, values of filter coefficients.

The frequency of the waveform shown in Fig. 3 corresponds tc the frequency of the aforementioned Gabor filter. The width of the Gauss window function is denoted by w in Fig. 4. In this case, the characteristic of the Gabor filter is represented by the waveform shown in Fig. 5. In Fig. 5, the amplitude of the waveform is large in the portion at the center of the figure where the value of the Gauss window function is increased, and the amplitude of the waveform is small in the portions in the vicinity of the left and right ends in the figure where the value of the Gauss window function is decreased.

With respect to the Gabor filters shown in Fig. 2, four waves (stripes), of which the pixel color is changed from white to black, may be observed in all of the 40 filters. In this manner, the Gabor filter is configured to have a shape corresponding to a waveform, of which the amplitude is changed according to a decrease of the Gauss window function.

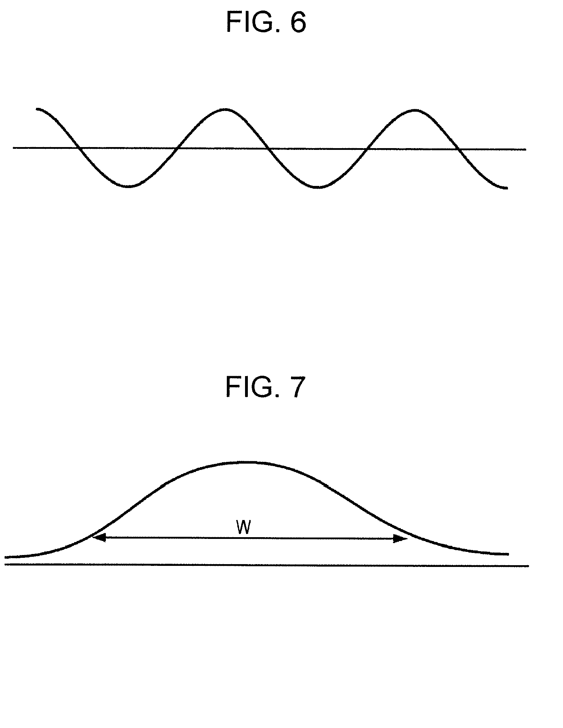

Now, a carrier shown in Fig. 6 constructed with cosine (or sine) components, of which the frequency is lower than that of the carrier shown in Fig. 3, is considered. As described above, since the width of the Gauss window function Equation (1) is inversely proportional to the frequency of the Gabor filter, the Gauss window function corresponding to the frequency of the carrier shown in Fig. 6 has a large width w as shown in Fig. 7. Accordingly, in the case where the frequency of the Gabor filter is low, if the horizontal axis in the figure is not taken to have a sufficiently large length, the waveform of which the amplitude is changed according to a decrease of the Gauss window function may not be observed. In other words, in the case where the frequency is low, if the horizontal axis (for example, the pixel positions) is not taken to have a sufficiently large length as shown in Fig. 7, the Gauss window function is not sufficiently decreased.

Accordingly, in the case where the frequency of the Gabor filter is low, if the area of the input image is not taken to be sufficiently large, the feature quantity may not be appropriately obtained.

In other words, in the Gabor filter in the related art, if the feature quantity of a low-frequency portion (for example, a nose portion on a human face) is to be calculated, a large number of pixels around the feature point are necessarily used for the calculation of Equation (4). In other words, the integration range in the calculation of Equation (4) is necessarily taken to be wide.

However, in the calculation of the feature quantity vector using Equation (4), if the convolution calculation using a wide integration range as described above is to performed, the following problems occur.

Firstly, an input image having a sufficiently large area according to the integration range of Equation (4) is necessarily prepared. For example, in the filter shown in Fig. 2, in order to satisfy the DC-Free characteristic, the area of the filter having a low frequency shown in the lower portion of the figure is necessarily configured to be large.

Secondly, in the case where, for example, Equation (1) is calculated in advance and the result thereof is stored in a memory, a large memory area is to be necessarily provided. In other words, in order to satisfy the DC-Free characteristic, since the area of the filer having a low frequency is necessarily increased, the integration range is also increased. As a result, in the case where, for example, the subscript j in Equation (4) indicates a Gabor filter having a low frequency, if a larger number of calculation results are to be stored in the memory, the integral calculation of Equation (4) may not be performed at a high speed.

For example, in the case where the subscript j in Equation (4) represents a Gabor filter having a high frequency, each of the calculation results that are obtained by replacing the x attached with the vector symbol in Equation (1), for example, with the coordinate positions (x-32, y-32) to (x+32, y+32) may be stored in a memory in advance. However, in the case where the subscript j represents a Gabor filter having a low frequency, if each of the calculation results that are obtained by replacing the x attached with the vector symbol in Equation (1), for example, with the coordinate positions (x-160, y-160) to (x+160, y+160) is stored in advance, the integral calculation of Equation (4) may not be performed at a high speed.

Thirdly, since the integration range is wide, in the case where feature quantities in the vicinity of a boundary between the face and the background are to be extracted, a large number of feature quantities of the background area are included.

Fourthly, the calculation amount of the Equation (4) is increased proportional to the area of the input image. In other words, as described in the second problem, if the integration range is increased, the calculation amount is also increased.

Due to these problems, in many cases of the process of the Gabor filter in the related art, the convolution calculation is performed in a state in which the DC-Free characteristic may be allowed not to be satisfied in the actual calculation and the integration range is limited. For example, with respect to the Gabor filter having a low frequency, although the input image having a sufficiently large area is to be necessarily prepared. However, in the actual cases, the input image for the Gabor filter having a high frequency and the input image having no change in the area have been used. However, in this case, the robustness with respect to illumination change deteriorates.

Therefore, in the invention, the DC-Free characteristic may be satisfied irrespective of the limitation of the integration range.

As described above, in the process of the Gabor filter in the related art, the value of parameter σ in Equation (1) is set to a constant (for example, 2π). However, in the invention, the value of the parameter σ is set to a variable. In the invention, the value of the parameter σ is represented as a function of the frequency parameter ν and is obtained by using Equation (5).

$$\sigma(\nu) = 2\pi \cdot 2^{-\left(\frac{\nu-\nu_0}{2}\right)}$$

$$\cdots (5)$$

In Equation (5), $\nu_0$ is a constant determined by the integration range in the calculation of Equation (4).

In the process of the Gabor filter according to the invention, instead of the aforementioned Equation (1), Equation (6) is employed. In addition, Equation (6) is obtained by substituting Equation (2) and Equation (5) into Equation (1).

$$\psi_j(\vec{x}) = 2^{\nu_0} \exp\left[-\frac{x^2}{2 \cdot \left[2^{-\frac{\nu_0}{2}}\right]^2}\right]\left[\exp(i\vec{k}_j\vec{x}) - \exp(-\pi^2 \cdot 2^{-(\nu-\nu_0)})\right]$$

$$\cdots (6)$$

In addition, since Equation (1) satisfies the DC-free characteristic irrespective of the value of the parameter $\sigma$, Equation (6) also satisfies the DC-free characteristic.

In Equation (6), the width of the Gauss window function is 2 with exponent of $(-(\nu - \nu_0)/2)$, which is constant irrespective of the frequency of the Gabor filter. Accordingly, if the parameter $\nu_0$ is set to an appropriate value so as to sufficiently decrease the Gauss window function within the integration range, the Gabor filter that satisfies the DC-Free characteristic may be configured irrespective of the magnitude of the frequency in an arbitrary integration range.

In the invention, $\psi_j(x)$ in Equation (6) is used for the calculation of Equation (4). Therefore, the localized feature calculation unit 71 of the image processing apparatus 11 according to the invention outputs the feature quantity that is obtained by using the $\psi_j(x)$ in Equation (6) for the calculation of Equation (4). Accordingly, for example, in order to perform the integral calculation of Equation (4) at a high speed, the calculation result of Equation (6) with respect to pixels in a predetermined range around one feature point as the center thereof according to the integration range may be stored in a memory or the like. The integration range, for example, may be arbitrarily designated by a user of the image processing apparatus 11. A value of the constant $\nu_0$ in the aforementioned Equation (5) and Equation (6) is determined according to the designated integration range.

Figs. 8 and 9 are diagram for exemplifying a difference between the Gabor filter in the related art and the Gabor filter according to the invention. Herein, an example where a total of 80 Gabor filters, as cosine/sine filters having eight orientations and five frequencies, are prepared is described. In Figs. 8 and 9, each of the 80 (=8×10) squares represents a Gabor filter.

Fig. 8 is a diagram illustrating an example of a Gabor filter in the related art, and Fig. 9 is a diagram illustrating an example of a Gabor filter according to the invention. Herein, in the figures, the Gabor filters are visualized by distinguishing filter coefficients of the Gabor filters loaded on pixel positions of an image corresponding to areas of the squares. In the figures, bright portions correspond to high filter coefficient values, and dark portions correspond to low filter coefficient values.

In addition, in Figs. 8 and 9, the vertical axis represents an amount of change in the frequency direction. In the axis, an upper portion corresponds to a high frequency, and a lower portion corresponds to a low frequency. In addition, in the figure, the horizontal axis represents an amount of change in the filter orientation (angle). In the axis, the leftmost portion corresponds to 0 degrees; as it goes to the right side, the angle is increased; the central portion corresponds to 90 degrees; and the rightmost side corresponds to an angle of about 180 degrees.

In the case of Fig. 8, in the Gabor filter having a low frequency in the lower portion of the figure, the waves where the colors of pixels are changed from white to black exceed the area of the squares. On the other hand, in the case of Fig. 9, in the Gabor filter having a low frequency in the lower portion of the figure, the waves where the colors of pixels are changed from white to black do not exceed the area of the squares. In this manner, the Gabor filter according to the invention shown in Fig. 9 satisfies the DC-Free characteristic and, even at the low frequency, the integration range may not necessarily be taken to be large.

Returning to Fig. 1, the feature quantity calculated by the localized feature calculation unit 71 is supplied to the face recognition unit 74.

The face recognition unit 74 compares the feature quantity vector calculated by the localized feature calculation unit 71 with the registered face image data registered in the face registration database 35. In other words, the face recognition unit 74 calculates the correlation coefficient and determines whether or not the current person matches with the registered person. The face recognition unit 74 supplies the determination result to the recognition result output unit 36.

Information of the feature quantity for recognition of the registered person is registered in the face registration database 35. In other words, all Gabor Jets corresponding to the feature point of the face image of the registered person are registered in the face registration database 35.

The data of the feature quantity registered in the face registration database 35 (registered face image data) are data that are acquired and registered through the processes of the image acquisition unit 31 to the localized feature calculation unit 71 shown in Fig. 1. In addition, data that are externally acquired and registered may be used as the data that are obtained through the processes of the image acquisition unit 31 to the localized feature calculation unit 71.

The recognition result output unit 36 may externally notify the determination result supplied from the face recognition unit 74 by using, for example, a buzzer sound, a text display, or LED blinking. Alternatively, the recognition result output unit 36 may output the determination result to an external apparatus. More specifically, for example, the recognition result output unit 36 may be configured to include, for example, a display. Alternatively, the recognition result output unit 36 may be configured to display the determination result in a format of a message or the like.

For example, in the case where a registered face image matching with the face image included in the input image is registered in the face registration database 35, information on the person of the face image such as name may be output. For example, the information on the person such as name thereof corresponding to the registered face image that is determined to match is read from the face registration database 35, and the information such as name is output to the recognition result output unit 36 as the determination result.

In addition, in the case where the registered face image matching with the face image included in the input image is not registered in the face registration database 35, information indicating that there is no registration may be output. For example, a message "non-registered person" is output as the determination result.

In this manner, the image processing apparatus 11 determines whether or the obtained face image of the person matches with the face image of the registered person by comparing the feature quantities.

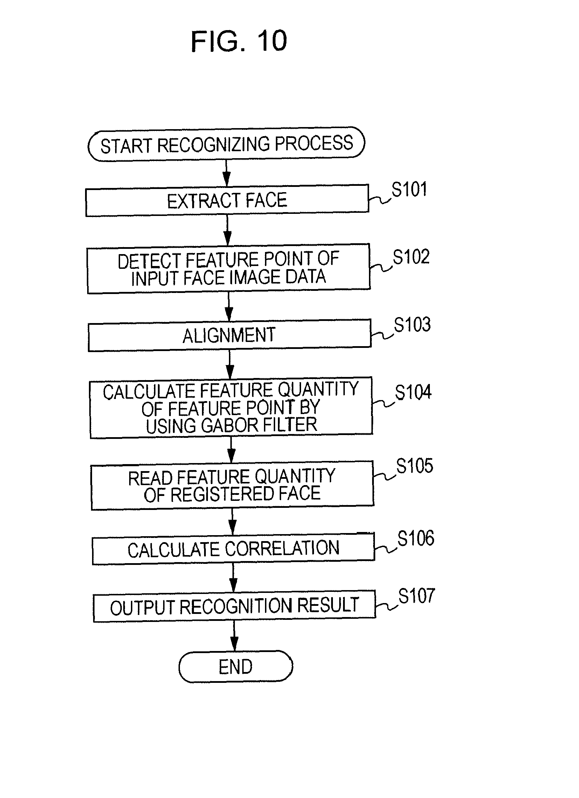

Next, an example of the recognition process of the image processing apparatus 11 according to the invention is described with reference to a flowchart of Fig. 10.

In Step S101, the face detection unit 32 detects the portion corresponding to the face from the image including the face image acquired by the image acquisition unit 31 and supplies the detected face image to the face feature point detection unit 51 and the face alignment unit 52.

In Step S102, the face feature point detection unit 51 detects feature portions of the face (face feature position), for example, the feature portions such as the eyes, the nose, or the mouth.

In Step S103, the face alignment unit 52 performs the morphing process such as affine transformation on the face image supplied from the face detection unit 32 based on the face feature point detected by the face feature point detection unit 51, so that the face image is transformed to correspond to the face image that is photographed as straightly viewed in front of the face. The transformed face image is supplied to the localized feature calculation unit 71.

In Step S104, the localized feature calculation unit 71 calculates the localized feature quantity, for example, by using the Gabor filter described in detail with reference to Fig. 9. At this time, as described above, in the invention, the feature quantity vector is calculated by using the Gabor kernel expressed by Equation (6) for the calculation of Equation (4).

In Step S105, the face recognition unit 74 reads the feature quantity of the registered face from the face registration database 35.

In Step S106, the face recognition unit 74 calculates a correlation coefficient. At this time, the face recognition unit 74 calculates the correlation coefficient between the feature quantity vector supplied from the localized feature calculation unit 71 and the feature quantity vector of the registered face read from the face registration database 35.

In Step S107, the recognition result output unit 36 outputs the recognition result of existence of the to-be-recognized object based on the calculation result supplied from the face recognition unit 74. For example, the recognition result indicating whether or not the to-be-recognized object (for example, the registered face read from the face registration database 35) is included in the input image is output.

However, the Gabor jets constituting the feature quantity vector are prepared to have various frequencies and orientation parameters. However, particularly, in the case where features of the face image are to be obtained, since the frequencies and orientation parameters necessary for representing the features of the feature points are different, unnecessary parameters of the feature points may exist.

Therefore, since the Gabor feature obtained from the unnecessary parameters may generally have a value having no correlation with the localized feature of the feature point, in the case of obtaining the correlation coefficient between the feature quantity vectors including the unnecessary parameters, the Gabor feature may have a bad influence on the obtained result.

In addition, in the case where the localized feature of a feature point is expressed by a plurality of independent factors (for example, a facial expression, personality, glasses, or the like), it may be difficult to evaluate the correlation independent of the factor in the correlation value between the feature quantity vectors constructed with all the Gabor jets.

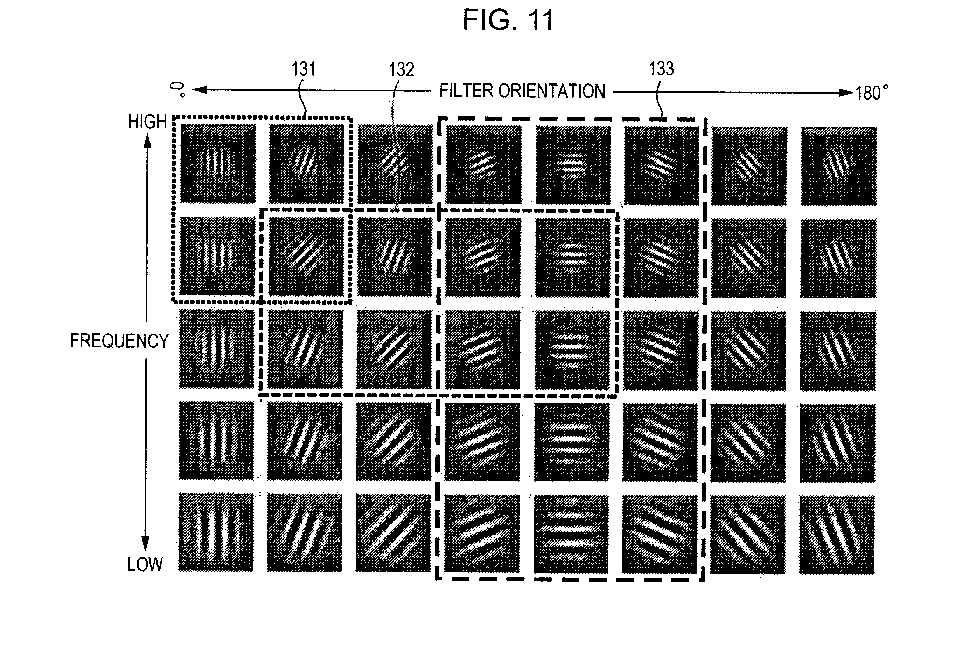

The frequency band and orientations necessary for the feature points having no unnecessary parameter, that is, the feature point may be assumed to be within a continuous range. Therefore, the square area having an arbitrary position and size such as the square 131, the square 132, and the square 133 shown in Fig. 11 may be selected from the feature dimensions shown in Fig. 2 where the scales and orientations of all the Gabor filters are arrayed. In this manner, the combination of the elements (hereinafter, referred to as localized feature quantities) of the feature quantity vector that is determined according to the feature point is very suitable for obtaining the feature of the face image.

Therefore, if the square area having an arbitrary position and size is selected from the feature dimension where the Gabor filters are arrayed in the scale and orientation, the number of the combinations thereof is $_5C_2\times_8P_2=560$ in maximum, a reasonable number of the feature dimensions may be selected. In addition, in the case where the frequency band and orientation necessary for the feature point are within the square area selected as the combination, in other words, in the case where the frequency band and orientation are not included in the square area of the Gabor feature having no correlation with the localized feature, it may prevent bad influence of the feature quantity having no correlation.

Accordingly, in the actual case of the process of recognizing the face image, the correlation coefficients of all the localized feature quantities calculated by using, for example, 40 Gabor filters are not calculated with respect to the individual feature points, but it is preferable that a combination of the localized feature quantities according to the feature points is determined.

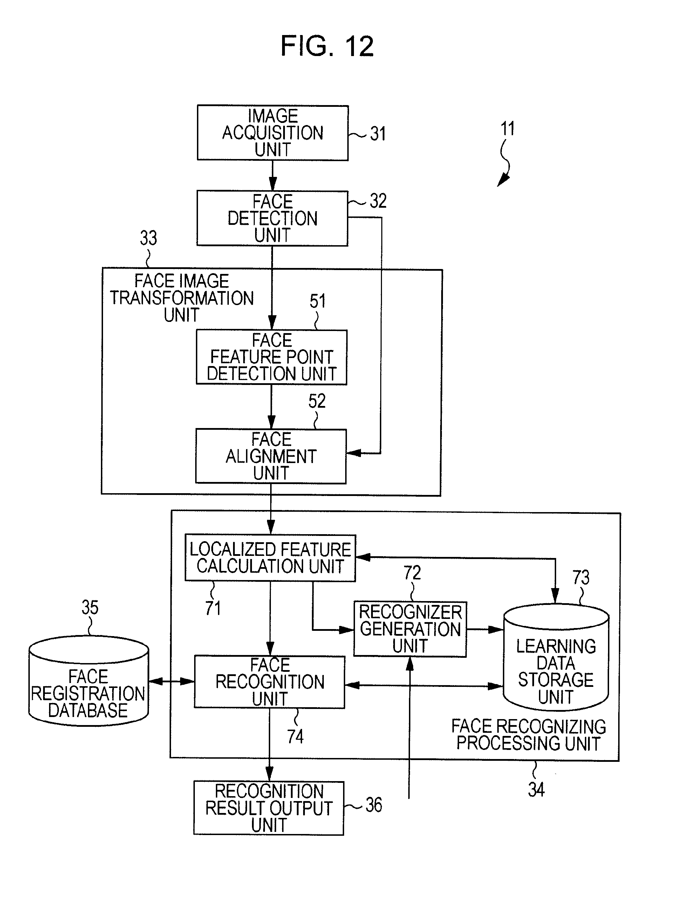

In the case where the combination of the localized feature quantities according to the feature points is determined, the image processing apparatus 11 may be configured, for example, as shown in Fig. 12. Fig. 12 is a block diagram illustrating another example of a configuration of the image processing apparatus 11 according to the invention. Fig. 12 illustrates an example of the image processing apparatus capable of calculating the feature quantity vectors, for example, by using the Gabor filters described with reference to Fig. 9 and determining the combination of the localized feature quantities according to the feature points. In the figure, the same components as those of Fig. 1 are denoted by the same reference numerals.

In Fig. 12, the image acquisition unit 31 to the face image transformation unit 33 are the same as those described with reference to Fig. 1, and thus, the detailed description thereof is omitted.

In the configuration of Fig. 12, the image processing apparatus 11 operates in two operation modes, that is, a learning mode and a recognition mode. The learning mode is a mode of performing a process of learning a recognition process using a learning image and generating a recognizer which is to be used for a recognition process in the recognition mode. The recognition mode is a mode of performing a process of recognizing an image using the recognizer generated in the learning mode and determining whether or not the to-be-recognized image includes a face of a registered person.

In addition, in Fig. 12, the face recognition processing unit 34 is configured to include a localized feature calculation unit 71, a recognizer generation unit 72, a learning data storage unit 73, and a face recognition unit 74.

In Fig. 12, the feature quantity vector calculated by the localized feature calculation unit 71 is configured to be supplied to the recognizer generation unit 72 in the learning mode and to be supplied to the face recognition unit 74 in the recognition mode.

In the case of Fig. 12, in the learning mode, the localized feature calculation unit 71 generates plural types of combinations with respect to each of the feature points by designating multiple-dimension feature vector sets including at least some feature quantities among the feature quantities obtained by the 40 Gabor filters as the localized feature quantity.

The combinations may be generated to include all the feature quantities obtained by the 40 Gabor filters. In other words, the combinations may or may not include 40-dimension feature vectors.

In other words, the localized feature calculation unit 71 may obtain a plurality of the feature quantity vectors having 40 or less parameters with respect to one feature point. For example, the localized feature quantities of the N feature points are configured to be calculated with respect to one face image. In addition, p types of the combination of Gabor filters are prepared. In this case, P types of the feature quantity vectors may be obtained with respect to one feature point, and N×P feature quantity vectors may be obtained with respect to one face image.

In this manner, the localized feature calculation unit 71 generates combinations of some sets of the feature quantities obtained by the 40 Gabor filters as the localized feature quantity. However, in the selection of the combination used as the localized feature quantity among the combinations, a random combination may be selected. However, the total number of combinations is necessarily very large.

Therefore the localized feature calculation unit 71 determines the combination of the localized feature quantities by selecting the square area having an arbitrary position and size such as the square 131, the square 132, or the square 133 shown in Fig. 11 from the Gabor filters shown in Fig. 2. In addition, herein, although the square area shown in Fig.

11 is selected from the Gabor filter of Fig. 2 for simplifying the description, in actual cases, a square area having an arbitrary position and size is selected from the Gabor filter described above with reference to Fig. 9.

In the learning mode, the localized feature calculation unit 71 supplies a plurality of feature quantity vectors having 40 or less parameters with respect to each of the feature points to the recognizer generation unit 72. In addition, in the recognition mode, the localized feature calculation unit 71 calculates the localized feature quantity corresponding to the feature point based on the recognition feature quantity stored in the learning data storage unit 73 and supplies the localized feature quantity to the face recognition unit 74. The recognition feature quantity is information indicating which localized feature quantity of which feature point (that is, which portion of the Gabor filter) is used for the recognizer generated through the learning in the recognizer generation unit 72.

Accordingly, the recognizer generation and the correlation coefficient calculation performed at the face recognition time may be performed not only on the one correlation coefficient including the feature quantity vectors using all the dimensions of each of the feature points but also on a plurality of correlation coefficients including the feature quantity vectors using some dimensions. In other words, a plurality of the feature quantities in different dimensions may be used for the learning and the recognition.

In the learning mode, the recognizer generation unit 72 performs a statistic learning process using Ababoost by using the learning image feature quantities calculated by the localized feature calculation unit 71 and the learning model feature quantities stored in advance. In the recognition mode, the recognizer generation unit 72 generates the recognizer that is to be used for the recognition process. Next, the recognizer generation unit 72 stores the generated recognizer and the information on the recognizer (information indicating the correlation value and the reliability of the recognizer) in the learning data storage unit 73. In addition, the recognizer generation unit 72 extracts only the model feature quantities that greatly influence the recognition of the to-be-recognized face image during the learning of the recognizer. Next, the recognizer generation unit 72 supplies the information indicating which localized feature quantity of which feature point (which square area portion of the Gabor filter) is used for the recognizer as the recognition feature quantity to the learning data storage unit 73 stores the information therein.

The Adaboost is a theory proposed by Freund et al., in 1996, capable of implementing a "strong recognizer" by combining a plurality of sets of "recognizers better than a random recognizer" (sometimes, referred to as a weak learner). The recognizers generated by the recognizer generation unit 72 are "weak recognizers better than a random recognizer", and each of the recognizers is generated so that the recognizer generated in front thereof allocates a weighting factor to poor recognition.

Therefore, in the recognition process, the reliability is obtained according to how reliable each of the weak recognizer is, and a majority determination is performed based on the reliability.

The recognizer generated by the recognizer generation unit 72, information on the recognizer, and the recognition feature quantity are stored in the learning data storage unit 73.

In the case of Fig. 12, in the recognition mode, the face recognition unit 74 compares the feature quantity calculated by the localized feature calculation unit 71 with the registered face image data registered in the face registration database 35 by using the recognizer stored in the learning data storage unit 73. For example, the correlation coefficient between the feature quantity and the registered face image data is calculated, and it is determined whether or not there is a match with the registered person. The determination result is supplied to the recognition result output unit 36. In other words, the face recognition unit 74 performs the majority determination of the determination result of the recognizer based on the reliability of the recognizer stored in the learning data storage unit 73 to determine whether or not there is a match with the registered person.

In the case of Fig. 12, the information on the feature quantity necessary for the recognition of the registered person is registered in the face registration database 35. In other words, all the Gabor jets of the all the feature points in the face image of the registered person may be registered in the face registration database 35. However, at least the information on the feature quantity corresponding to the recognition feature quantities may be registered.

The data of the feature quantities registered in the face registration database 35 (registered face image data) are configured as the data that are acquired by performing the processes of the image acquisition unit 31 to the localized feature calculation unit 71 of Fig. 1 and registered. In addition, data that are externally acquired and registered may be used as the data that are obtained through the processes of the image acquisition unit 31 to the localized feature calculation unit 71.

The recognition result output unit 36 may externally notify the determination result supplied from the face recognition unit 74 by using, for example, a buzzer sound, a text display, or LED blinking. Alternatively, the recognition result output unit 36 may output the determination result to an external apparatus. More specifically, for example, the recognition result output unit 36 may be configured to include, for example, a display. Alternatively, the recognition result output unit 36 may be configured to include or a unit of displaying the determination result in a format of a message or the like.

For example, in the case where a registered face image matching with the face image included in the input image is registered in the face registration database 35, information on the person of the face image such as name may be output. For example, the information on the person such as name thereof corresponding to the registered face image that is determined to match is read from the face registration database 35, and the information such as name is output to the recognition result output unit 36 as the determination result.

In addition, in the case where the registered face image matching with the face image included in the input image is not registered in the face registration database 35, information indicating that there is no registration may be output. For example, a message "non-registered person" is output as the determination result.

The image processing apparatus 11 may be configured as follows.

In addition, an image processing apparatus of generating a recognizer used for a recognition process in a recognition mode by performing a statistic learning process using Adaboost is disclosed in Japanese Unexamined Patent Application Publication No. 2008-165731.

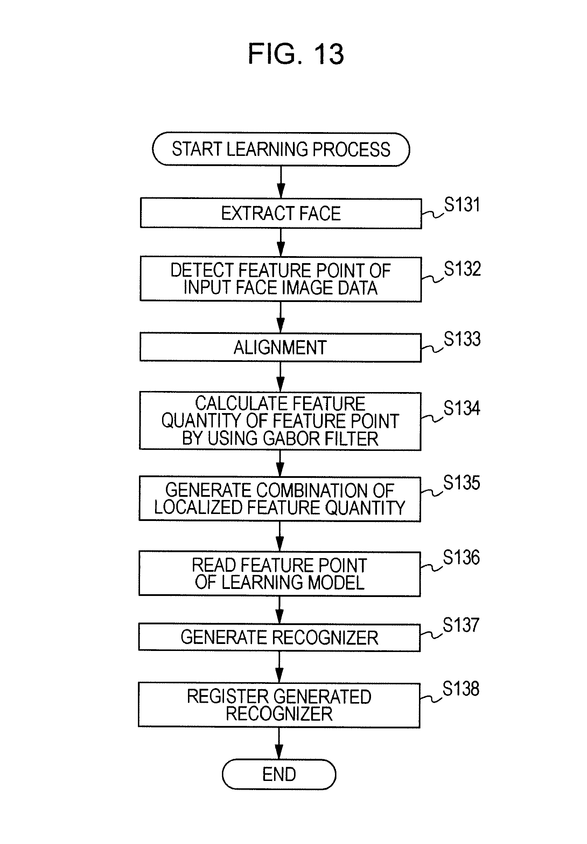

Next, a learning process performed by the image processing apparatus 11, which is configured as shown in Fig. 12, in the learning mode is described with reference to a flowchart of Fig. 13.

In Step S131, the face detection unit 32 detects a portion corresponding to the face from an image including the face image acquired by the image acquisition unit 31 and supplies the detected face image to the face feature point detection unit 51 and the face alignment unit 52.

In Step S132, the face feature point detection unit 51 detects feature portions of the face (face feature positions), for example, the feature portions such as the eyes, the nose, or the mouth.

In Step S133, the face alignment unit 52 performs the morphing process such as affine transformation on the face image supplied from the face detection unit 32 based on the face feature point detected by the face feature point detection unit 51. Accordingly, the face image is transformed to correspond to the face image that is photographed as straightly viewed in front of the face. The transformed face image is supplied to the localized feature calculation unit 71.

In Step S134, the localized feature calculation unit 71 calculates the localized feature quantity, for example, by using the Gabor filter described in detail with reference to Fig. 9.

In Step S135, the localized feature calculation unit 71 combines some sets of at least a portion of the localized feature quantities obtained by the Gabor filter as described with reference to Fig. 11 and supplies the sets to the recognizer generation unit 72. The combination method and the number of generated combinations may be experimentally or empirically determined in advance. More appropriately, the combination method and the number of generated combinations may be selected so that the frequency bands and orientations are continuous as described with reference to Fig. 11.

In Step S136, the correlation coefficient calculation unit 101 of the recognizer generation unit 72 reads the feature quantity of the learning model from the learning model feature quantity storage unit 102 and calculates the correlation coefficient of the combination of the localized feature quantity supplied from the localized feature calculation unit 71 and the learning model in the same combination.

In Step S137, the recognizer generation unit 72 generates a recognizer.

In Step S138, the recognizer generation unit 72 registers the recognizer generated by the process of Step S137. At this time, for example, the generated recognizer and information on the recognizer (information indicating the correlation value and the reliability of the recognizer) are stored in the learning data storage unit 73.

Due to this process, in the learning mode, the recognizer is generated and stored in the learning data storage unit 73, and the model feature quantity corresponding to the recognizer and the reliability of the recognizer are stored in the learning data storage unit 73. In other words, the information on the recognition feature quantity indicating which combination of which feature point the Gabor feature used for the generation of the recognizer is associated with (for example, if a total of 40 Gabor filters are prepared, which filter the Gabor feature is associated with) and the reliability of the recognizer are stored in the learning data storage unit 73.

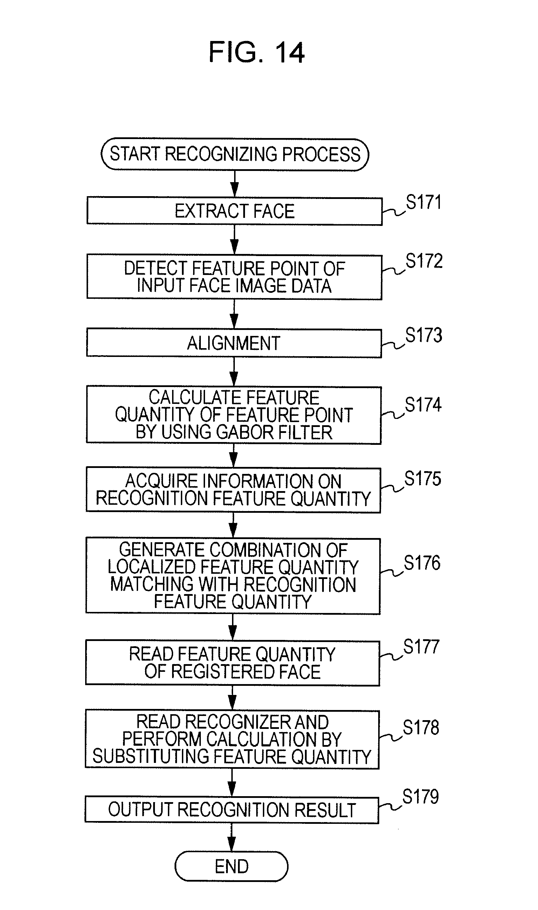

Next, a recognition process performed by the image processing apparatus 11, which is configured as shown in Fig. 12, in the recognition mode, is described with reference to a flowchart of Fig. 14.

In Step S171, the face detection unit 32 detects a portion corresponding to the face from an image including the face image acquired by the image acquisition unit 31 and supplies the detected face image to the face feature point detection unit 51 and the face alignment unit 52.

In Step S172, the face feature point detection unit 51 detects feature portions of the face (face feature positions), for example, the feature portions such as the eyes, the nose, or the mouth.

In Step S173, the face alignment unit 52 performs the morphing process such as affine transformation on the face image supplied from the face detection unit 32 based on the face feature point detected by the face feature point detection unit 51.

In Step S174, the localized feature calculation unit 71 calculates the localized feature quantity, for example, by using the Gabor filter as described with reference to Fig. 9.

In Step S175, the localized feature calculation unit 71 acquires information on the recognition feature quantity from the learning data storage unit 73.

Herein, the information on the recognition feature quantity is information indicating which combination of which feature point the Gabor feature used for the generation of recognizer is associated with (for example, if a total of 40 Gabor filters are prepared, the information indicates which feature point is associated with a combination of filters among the filters in the generation of recognizer).

In Step S176, the localized feature calculation unit 71 generates a combination of the localized feature quantity obtained by the Gabor filter and the localized feature quantity of the feature point represented in the recognition feature quantity based on the information of the acquired recognition feature quantity and supplies the combination of the localized feature quantities as the correlation coefficient calculation information to the face recognition unit 74.

In Step S177, the face recognition unit 74 reads the feature quantity of the registered face from the face registration database 35.

In Step S178, the face recognition unit 74 reads the recognizer from the learning data storage unit 73 and performs the calculation by substituting the feature quantity therein. The face recognition unit 74 calculates a correlation coefficient corresponding to the combination of the localized feature quantities of the feature points represented in the recognition feature quantity as the correlation coefficient calculation information supplied from the localized feature calculation unit 71 and the combination of the localized feature quantities of the feature points represented in the recognition feature quantity among the feature quantities of the registered face read from the face registration database 35. Next, the face recognition unit 74 performs the calculation by substituting the obtained correlation coefficient as the feature quantity to the recognizer read from the learning data storage unit 73.

In Step S179, the recognition result output unit 36 outputs the recognition result of existence of the to-be-recognized object based on the calculation result supplied from the face recognition unit 74.

Therefore, the combination of the localized feature quantities may be determined according to the feature points, so that a plurality of feature quantities in different dimensions may be used for learning and recognition.

In addition, the configuration of the image processing apparatus 11 of determining the combination of the localized feature quantities according to the feature points is not limited to the configuration shown in Fig. 12, but other configurations may be employed.

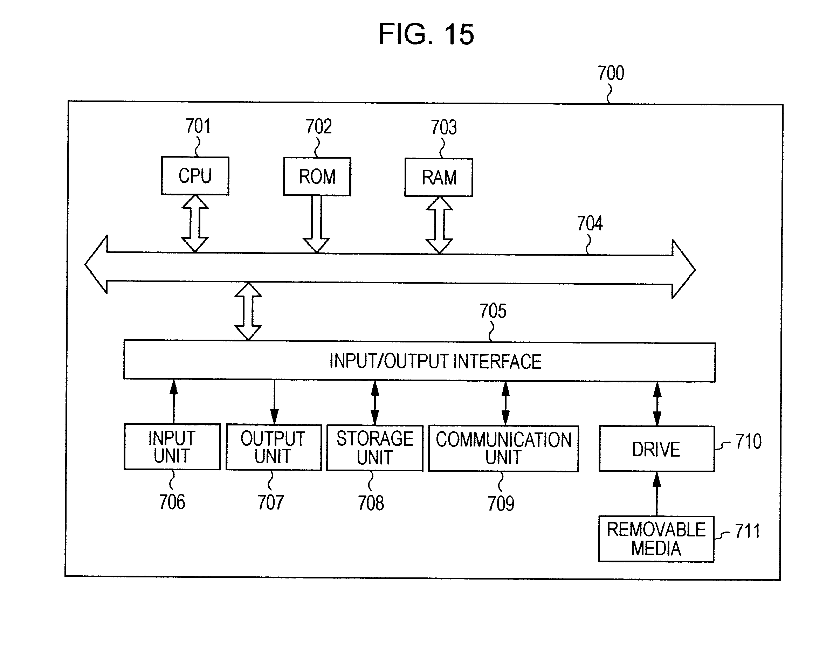

In addition, a series of the aforementioned processes may bE performed in a hardware or software manner. In the case where a series of the aforementioned processes is performed in a software manner, a program constituting the software may be installed in a computer that is assembled in dedicated hardware or allows various programs to be installed so as to execute various functions, for example, a general-purpose personal computer 700 shown in fig. 15 through a network or a recording medium.

In Fig. 15, a CPU (central processing unit) 701 executes various processes according to programs stored in a ROM (read only memory) 702 or programs loaded on a RAM (random access memory) 703 from a storage unit 708. The RAM 703 also appropriately stores data necessary for the execution of the various processes of the CPU 701.

The CPU 701, the ROM 702, and the RAM 703 are connected to each other via a bus 704. In addition, an input/output interface 705 is also connected to the bus 704.

The input/output interface 705 is connected to an input unit 706 such as a keyboard and a mouse, an output unit 707 constructed with a display such as an LCD (liquid crystal display) and a speaker, a storage unit 708 constructed with a hard disk or the like, and a communication unit 709 constructed with network interface cards such as a modem and a LAN card. The communication unit 709 performs a communication process via a network including the Internet.

In addition, if necessary, a drive 710 is connected to the input/output interface 705. A removable media 711 such as magnetic disk, an optical disk, an optical magnetic disk, or a semiconductor memory is appropriately loaded, and a computer program read therefrom is installed in the storage unit 708 if necessary.

In the case where a series of the aforementioned processes is performed, a program constituting the software is installed via a network such as the Internet or from a recording medium such as a removable media 711.

In addition, the recording medium may be configured as the removable media 711 that is distributed to users so as to deliver the program to the users separately from a main body of the apparatus as shown in Fig. 15. As an example of the removable media 711, there is a program-recorded magnetic disk (including a floppy disk (registered trade mark)), an optical disk (including a CD-ROM (compact disc-read only memory) and a DVD (digital versatile disc)), an optical magnetic disk (including a MD (mini-disk) (registered trade mark), a semiconductor memory, or the like. In addition, the recording medium may be delivered in a state in which the recording medium is assembled in advance in the main body of the apparatus. The recording medium may include the ROM 702 in which the program is recorded or a hard disk or the like included in the storage unit 708.

In addition, a series of the aforementioned processes may bE performed according to the temporal order disclosed in the specification of the invention. Alternatively, instead of the performance according to the temporal order, the processes may also be performed in parallel or individually.

In addition, the embodiments of the invention are not limited to the aforementioned embodiments, but various modifications are available within the scope without departing from the spirit of the invention.

The present application contains subject matter related to that disclosed in Japanese Priority Patent Application JP 2009-093623 filed in the Japan Patent Office on April 8, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. A Gabor filter, in which a value of a parameter $\sigma$ of determining shapes of a plurality of Gabor functions having different orientations and frequencies is configured as a variable value expressed by a function of a frequency parameter $\nu$ of specifying the frequencies.

2. The Gabor filter according to claim 1, wherein a constant $\nu_0$ determined by an integration range of a calculation of the Gabor filter is designated, and the parameter $\sigma$ is configured as a variable value calculated by the following Equation 5.

$$\sigma(\nu) = 2\pi \cdot 2^{-(\frac{\nu-\nu_0}{2})}$$

3. The Gabor filter according to claim 1 or 2,
   wherein a gradation value of an input image is denoted by I, and an orientation parameter of specifying the orientation is denoted by $\mu$,
   wherein a result $J_j$ of a j-th Gabor filter among the plurality of the Gabor filters is expressed by the following Equation 4, and
   wherein the result is calculated based on the following Equations 3, 6, and 2.

[Equation 4]

$$J_j(\vec{x}_i) = \int I(\vec{x}')\psi_j(\vec{x}_i - \vec{x}')d^2\vec{x}'$$

[Equation 3]

$$j = \mu + 8\nu$$

[Equation 6]

$$\psi_j(\vec{x}) = 2^{\nu_0}\exp\left(-\frac{x^2}{2\cdot\left(2^{-\frac{\nu_0}{2}}\right)^2}\right)\left[\exp(i\vec{k}_j\vec{x}) - \exp(-\pi^2 \cdot 2^{-(\nu-\nu_0)})\right]$$

[Equation 2]

$$\vec{k}_j = \begin{pmatrix} k_{jx} \\ k_{jy} \end{pmatrix} = \begin{pmatrix} k_\nu \cos\phi_\mu \\ k_\nu \sin\phi_\mu \end{pmatrix}, \ k_\nu = 2^{-\frac{\nu+2}{2}\pi}, \ \phi_\mu = \mu\frac{\pi}{8}$$

4. An image recognition apparatus comprising:

a feature point detection means for detecting a feature point of an image of input image data;
a feature quantity detection means for detecting a localized feature quantity of the feature point by using a Gabor filter, in which a value of a parameter $\sigma$ of determining shapes of a plurality of Gabor functions having different orientations and frequencies is configured as a variable value expressed by a function of a frequency parameter $\nu$ of specifying the frequencies;
a calculation means for calculating a correlation coefficient between the detected feature quantity and a feature quantity of a registered image that is registered in advance; and
an output means for outputting a recognition result of determining based on the correlation coefficient whether or not the registered image is included in the image of the input image data.

5. The image recognition apparatus according to claim 4, wherein a constant $\nu_0$ determined by an integration range of a calculation of the Gabor filter is designated, and the parameter $\sigma$ is configured as a variable value calculated by the following Equation 5.

[Equation 5]

$$\sigma(\nu) = 2\pi \cdot 2^{-\left(\frac{\nu-\nu_0}{2}\right)}$$

6. The image recognition apparatus according to claim 4 or 5,
wherein a gradation value of an input image is denoted by I, and an orientation parameter of specifying the orientation is denoted by $\mu$,
wherein a result $J_j$ of a j-th Gabor filter among the plurality of the Gabor filters is expressed by the following Equation 4, and
wherein the result is calculated based on the following Equations 3, 6, and 2.

[Equation 4]

$$J_j(\vec{x}_i) = \int I(\vec{x}')\psi_j(\vec{x}_i - \vec{x}')d^2\vec{x}'$$

[Equation 3]

$$j = \mu + 8\nu$$

$$\psi_j(\vec{x}) = 2^{\nu_0} \exp\left[-\frac{x^2}{2 \cdot \left(2^{-\frac{\nu_0}{2}}\right)^2}\right] \left[\exp(i\vec{k}_j \vec{x}) - \exp(-\pi^2 \cdot 2^{-(\nu-\nu_0)})\right]$$

[Equation 2]

$$\vec{k}_j = \begin{pmatrix} k_{jx} \\ k_{jy} \end{pmatrix} = \begin{pmatrix} k_\nu \cos\phi_\mu \\ k_\nu \sin\phi_\mu \end{pmatrix}, \quad k_\nu = 2^{-\frac{\nu+2}{2}}\pi, \quad \phi_\mu = \mu\frac{\pi}{8}$$

**7.** An image recognition method comprising steps of:

detecting a feature point of an image of input image data;
detecting a localized feature quantity of the feature point by using a Gabor filter, in which a value of a parameter σ of determining shapes of a plurality of Gabor functions having different orientations and frequencies is configured as a variable value expressed by a function of a frequency parameter ν of specifying the frequencies;
calculating a correlation coefficient between the detected feature quantity and a feature quantity of a registered image that is registered in advance; and
outputting a recognition result of determining based on the correlation coefficient whether or not the registered image is included in the image of the input image data.

**8.** A program allowing a computer to function as an image recognition apparatus comprising:

a feature point detection means for detecting a feature point of an image of input image data;
a feature quantity detection means for detecting a localized feature quantity of the feature point by using a Gabor filter, in which a value of a parameter σ of determining shapes of a plurality of Gabor functions having different orientations and frequencies is configured as a variable value expressed by a function of a frequency parameter ν of specifying the frequencies;
a calculation means for calculating a correlation coefficient between the detected feature quantity and a feature quantity of a registered image that is registered in advance; and
an output means for outputting a recognition result of determining based on the correlation coefficient whether or not the registered image is included in the image of the input image data.

**9.** A recording medium on which the program according to claim 8 is recorded.

**10.** An image recognition apparatus comprising:

a feature point detection unit configured to detect a feature point of an image of input image data;
a feature quantity detection unit configured to detect a localized feature quantity of the feature point by using a Gabor filter, in which a value of a parameter σ of determining shapes of a plurality of Gabor functions having different orientations and frequencies is configured as a variable value expressed by a function of a frequency parameter ν of specifying the frequencies;
a calculation unit configured to calculate a correlation coefficient between the detected feature quantity and a feature quantity of a registered image that is registered in advance; and
an output unit configured to output a recognition result of determining based on the correlation coefficient whether or not the registered image is included in the image of the input image data.

# FIG. 1

```
                                   ┌─────────────┐
                                   │   IMAGE     │
                                   │ ACQUISITION │──31
                                   │    UNIT     │
                                   └─────────────┘
                                          │
          11                              ▼
                                   ┌─────────────┐
           ↘                       │    FACE     │
                                   │  DETECTION  │──32
                                   │    UNIT     │
                                   └─────────────┘
                                          │
    ┌──────────────────────────────────────────────────────┐
    │  FACE IMAGE                                            │
    │  TRANSFORMATION                51                      │
    │  UNIT                           ↲                      │
    │                         ┌─────────────┐               │
    │                         │    FACE     │               │
    │                         │FEATURE POINT│               │
    │                         │DETECTION UNIT│              │
    │                         └─────────────┘       ~33     │
    │                                │          52          │
    │                                ▼           ↲          │
    │                         ┌─────────────┐               │
    │                         │    FACE     │               │
    │                         │  ALIGNMENT  │◄──            │
    │                         │    UNIT     │               │
    │                         └─────────────┘               │
    └──────────────────────────────────────────────────────┘
                                          │
    ┌──────────────────────────────────────────────────────┐
    │  FACE RECOGNIZING                                      │
    │  PROCESSING UNIT                                       │
    │                                                ~34     │
    │                         ┌─────────────┐               │
    │                         │  LOCALIZED  │               │
    │                         │   FEATURE   │──71           │
    │                         │ CALCULATION │               │
    │                         │    UNIT     │               │
    │     35                  └─────────────┘               │
    │      ↲                         │                      │
    │ ┌──────────┐            ┌─────────────┐               │
    │ │   FACE   │            │    FACE     │               │
    │ │REGISTRATION│◄────────►│ RECOGNITION │──74           │
    │ │ DATABASE │            │    UNIT     │               │
    │ └──────────┘            └─────────────┘               │
    └──────────────────────────────────────────────────────┘
                                          │
                                          ▼
                                   ┌─────────────┐
                                   │ RECOGNITION │
                                   │RESULT OUTPUT│──36
                                   │    UNIT     │
                                   └─────────────┘
```

FIG. 2

EP 2 239 687 A2

## FIG. 3

## FIG. 4

W

## FIG. 5

# FIG. 6

# FIG. 7

W

FIG. 8

FIG. 9

# FIG. 10

```
( START RECOGNIZING PROCESS )
          │
          ▼
┌─────────────────────────────┐
│        EXTRACT FACE         │～ S101
└─────────────────────────────┘
          │
          ▼
┌─────────────────────────────┐
│    DETECT FEATURE POINT OF  │～ S102
│     INPUT FACE IMAGE DATA   │
└─────────────────────────────┘
          │
          ▼
┌─────────────────────────────┐
│         ALIGNMENT           │～ S103
└─────────────────────────────┘
          │
          ▼
┌─────────────────────────────┐
│  CALCULATE FEATURE QUANTITY │～ S104
│     OF FEATURE POINT BY     │
│       USING GABOR FILTER    │
└─────────────────────────────┘
          │
          ▼
┌─────────────────────────────┐
│    READ FEATURE QUANTITY    │～ S105
│     OF REGISTERED FACE      │
└─────────────────────────────┘
          │
          ▼
┌─────────────────────────────┐
│    CALCULATE CORRELATION    │～ S106
└─────────────────────────────┘
          │
          ▼
┌─────────────────────────────┐
│  OUTPUT RECOGNITION RESULT  │～ S107
└─────────────────────────────┘
          │
          ▼
        ( END )
```

# FIG. 11

EP 2 239 687 A2

# FIG. 12

```
                    ┌──────────────┐
                    │    IMAGE     │
                    │ ACQUISITION  │~31
                    │     UNIT     │
                    └──────┬───────┘
                           │                    11
                           ▼
                    ┌──────────────┐
                    │    FACE      │
                    │  DETECTION   │~32
                    │    UNIT      │
                    └──────┬───────┘
   33
┌──────────────────────────┼──────────────────────────┐
│ FACE IMAGE               │                           │
│ TRANSFORMATION           │        51                 │
│ UNIT                     ▼                           │
│                   ┌──────────────┐                   │
│                   │    FACE      │                   │
│                   │ FEATURE POINT│                   │
│                   │DETECTION UNIT│                   │
│                   └──────┬───────┘                   │
│                          │         52                │
│                          ▼                           │
│                   ┌──────────────┐                   │
│                   │    FACE      │                   │
│                   │  ALIGNMENT   │◄──────────────────┤
│                   │    UNIT      │                   │
│                   └──────┬───────┘                   │
└──────────────────────────┼──────────────────────────┘
                           │
┌──────────────────────────┼───────────────────────────────────┐
│                          ▼                                    │
│                 ┌──────────────────┐                          │
│                 │LOCALIZED FEATURE │◄─────────────────┐       │
│                 │ CALCULATION UNIT │        72         │  73   │
│                 └────────┬─────────┘   ┌──────────┐    │       │
│                          │   71        │RECOGNIZER│    │       │
│  35                      │             │GENERATION├──► ┌─────┐ │
│ ┌──────────┐             │         ┌──►│  UNIT    │    │LEARN│ │
│ │   FACE   │             ▼         │   └──────────┘    │ING  │ │
│ │REGISTRA- │◄──►┌──────────────┐   │                   │DATA │ │
│ │  TION    │    │    FACE      ├───┘              ┌───►│STOR-│ │
│ │ DATABASE │◄──►│ RECOGNITION  │◄─────────────────────│AGE  │ │
│ └──────────┘    │    UNIT      │                       │UNIT │ │
│                 └──────┬───────┘                       └─────┘ │
│                        │   74          FACE RECOGNIZING        │
└────────────────────────┼───────────────PROCESSING UNIT────────┘
                         │                              34
                         ▼
                  ┌──────────────┐
                  │ RECOGNITION  │
                  │RESULT OUTPUT │~36
                  │    UNIT      │
                  └──────────────┘
```

# FIG. 13

```
        START LEARNING PROCESS

              EXTRACT FACE                    S131

          DETECT FEATURE POINT OF             S132
          INPUT FACE IMAGE DATA

               ALIGNMENT                      S133

           CALCULATE FEATURE
         QUANTITY OF FEATURE POINT            S134
           BY USING GABOR FILTER

         GENERATE COMBINATION OF              S135
        LOCALIZED FEATURE QUANTITY

            READ FEATURE POINT                S136
            OF LEARNING MODEL

          GENERATE RECOGNIZER                 S137

          REGISTER GENERATED                  S138
              RECOGNIZER

                  END
```

# FIG. 14

```
            ( START RECOGNIZING PROCESS )
                         │
                         ▼
        ┌─────────────────────────────┐
        │        EXTRACT FACE         │── S171
        └─────────────────────────────┘
                         │
                         ▼
        ┌─────────────────────────────┐
        │    DETECT FEATURE POINT OF   │── S172
        │     INPUT FACE IMAGE DATA    │
        └─────────────────────────────┘
                         │
                         ▼
        ┌─────────────────────────────┐
        │          ALIGNMENT          │── S173
        └─────────────────────────────┘
                         │
                         ▼
        ┌─────────────────────────────┐
        │      CALCULATE FEATURE       │── S174
        │   QUANTITY OF FEATURE POINT  │
        │     BY USING GABOR FILTER    │
        └─────────────────────────────┘
                         │
                         ▼
        ┌─────────────────────────────┐
        │     ACQUIRE INFORMATION ON   │── S175
        │  RECOGNITION FEATURE QUANTITY │
        └─────────────────────────────┘
                         │
                         ▼
        ┌─────────────────────────────┐
        │   GENERATE COMBINATION OF    │── S176
        │  LOCALIZED FEATURE QUANTITY  │
        │  MATCHING WITH RECOGNITION   │
        │       FEATURE QUANTITY       │
        └─────────────────────────────┘
                         │
                         ▼
        ┌─────────────────────────────┐
        │     READ FEATURE QUANTITY    │── S177
        │      OF REGISTERED FACE      │
        └─────────────────────────────┘
                         │
                         ▼
        ┌─────────────────────────────┐
        │    READ RECOGNIZER AND       │── S178
        │   PERFORM CALCULATION BY     │
        │ SUBSTITUTING FEATURE QUANTITY │
        └─────────────────────────────┘
                         │
                         ▼
        ┌─────────────────────────────┐
        │   OUTPUT RECOGNITION RESULT  │── S179
        └─────────────────────────────┘
                         │
                         ▼
                    (   END   )
```

# FIG. 15

700

701 CPU
702 ROM
703 RAM

704 (bus)

705 INPUT/OUTPUT INTERFACE

706 INPUT UNIT
707 OUTPUT UNIT
708 STORAGE UNIT
709 COMMUNICATION UNIT
710 DRIVE
711 REMOVABLE MEDIA

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008165731 A

- JP 2009093623 A